(19) Europäisches Patentamt
European Patent Office
Office européen des brevets

(11) **EP 4 306 310 A1**

(12) **EUROPEAN PATENT APPLICATION**

(43) Date of publication:
**17.01.2024 Bulletin 2024/03**

(21) Application number: **22184290.9**

(22) Date of filing: **12.07.2022**

(51) International Patent Classification (IPC):
***B29D 30/06*** *(2006.01)*

(52) Cooperative Patent Classification (CPC):
**B29D 30/0654;** B29D 2030/0655

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Bridgestone Europe NV/SA**
**1930 Zaventem (BE)**

(72) Inventors:
• **BERNAL ORTEGA, Maria Del Mar**
**00128 Roma (IT)**

• **MAGGIO, Mario**
**00128 Roma (IT)**
• **TOMASELLI, Marco**
**00128 Roma (IT)**
• **CAPALDI, Cristian**
**00128 Roma (IT)**

(74) Representative: **Marchetti, Alessio**
**Bridgestone Europe N.V./S.A. - Italian Branch Technical Center**
**Via del Fosso del Salceto, 13/15**
**00128 Roma (IT)**

(54) **BLADDER FOR PNEUMATIC TYRE VULCANIZATION**

(57) The invention relates to a bladder for a pneumatic tyre curing apparatus, characterized in that said bladder comprises a blend of at least a first and a second rubber composition, the first and second rubber composition each comprising 100 phr of one or more organopolysiloxane rubber, the first and the second rubber composition having a difference in dynamic stiffness E' ranging from 2 to 18 MPa, preferably from 6 to 14 MPa, the dynamic stiffness being measured according to ISO 4664-1 standard.

**EP 4 306 310 A1**

**Description**

**FIELD OF THE INVENTION**

The present invention relates to a bladder for a pneumatic tyre curing apparatus, to a pneumatic tyre curing apparatus comprising such bladder and to a method to vulcanize a green tyre by the use of the tyre curing apparatus comprising such bladder.

**BACKGROUND OF THE INVENTION**

In the pneumatic tyre production process, the various portions of a pneumatic tyre are assembled together into a green tyre which is then subjected to a vulcanization step inside a curing apparatus.

Such curing apparatus comprise a mold that confers the final shape to the pneumatic tyre. The mold comprises a top half and a bottom half, defining an annular chamber for placing the green tyre. The top mold half is usually connected to a moving crosspiece on the press, whereas the bottom mold half is mounted on the bed of the press and supports a bladder designed to occupy the annular chamber when inflated.

During the vulcanization step, the green tyre is compressed between the walls of the mold by means of a bladder which, by swelling, pushes from the inside the green tyre against the walls of the mold.

As the subject matter expert knows, the bladder must be made using a material which is elastic but, at the same time, is able to withstand the mechanical and thermal stresses of a vulcanization step, and which is capable of ensuring multipleusage cycles of the bladder itself. To date, one of the most widely used materials for the manufacture of the bladder is butyl rubber.

Despite the fact that butyl rubber has excellent resistance to mechanical stress, heat and elongation, nonetheless it causes adhesion problems with the internal parts of the pneumatic tyre during the vulcanization step. In fact, once the conditions for vulcanization are obtained, the butyl rubber remains glued to the internal parts of the tyre, i.e., the innerliner layer.

To obviate this problem, anti-adhesive substances are normally used, which are applied to the surface of the bladder and to the inner surface of the greentyre. The use of these anti-adhesive substances poses two problems. The first problem is of production nature, due to the need for an additional step for their application thereof, as well as to their removal thereof. The second problem is of chemical nature, due to the possibility that the anti-adhesive substances could contaminate the internal part of the tyre.

It is well known that silicone rubbers have good resistance to extreme temperatures and good resistance to mechanical stress, while also possessing antiadhesive properties.

The prior art document JP2010221505 describes a bladder to be used in vulcanization molds for pneumatic tyres that does not require anti-adhesive substances to be applied to the surface of the bladder itself, nor to the inner surface of the pneumatic tyre. The proposed solution consists in providing a bladder comprising several layers of rubber, wherein the furthest outer layer contains a silicone rubber.

However, a bladder consisting of multiple rubber layers has the disadvantage of having poor construction efficiency and involves the possibility of detachment phenomena between the different layers due to the materials' incompatibility.

The prior art document WO2022038176 describes a bladder to be used in vulcanization molds for pneumatic tyres which comprises a single layer of a rubber composition, said rubber composition comprising 100 phr of a cross-linkable polymeric base consisting of an organopolysiloxane.

However, in case a single rubber composition is used, a possible problem is that the properties of elasticity and stress resistance of the material are not properly balanced. Depending on the formulation, a composition could be more performant in elasticity but less performant in stress resistance or viceversa. This could cause a negattive effect in the required balance of performances for a bladder.

Therefore, there's a need to have a bladder that does not adhere to the inner parts of the pneumatic tyre, without using antiadhesive substances, while at the same time showing good elasticity and good resistance to thermal and mechanical stresses, providing a good balance between the two performances.

The inventors of the present invention have developed a bladder using rubber compositions based upon organopolysiloxanes that are capable of satisfying the aforementioned requirement.

SUMMARY OF THE INVENTION

In a first aspect the present invention relates to a bladder for a pneumatic tyre curing apparatus, characterized in that said bladder comprises a blend of at least a first and a second rubber composition, the first and second rubber composition each comprising 100 phr of one or more organopolysiloxane rubber, the first and the second rubber composition having a difference in dynamic stiffness E' ranging from 2 to 18 MPa, preferably from 6 to 14 MPa, the dynamic stiffness being measured according to ISO 4664-1 standard.

In a second aspect the present invention relates to a pneumatic tyre curing apparatus characterized in that it comprises a bladder according to the first aspect.

In a third aspect the present invention relates to a method to vulcanize a green tyre in a pneumatic tyre curing apparatus according to the second aspect, comprising at least a vulcanization mold and a bladder, the method comprising the sequential steps of:

- assemblying a green tyre; then
- positioning the green tyre in the bottom half of the vulcanization mold to a position where the horizontal centre line of the green tyre corresponds to that of a bladder; then
- lowering the top half of the mold to the upper end portion of the green tyre and raising the bottom half of the mold to the lower end portion of the green tyre while simoultaneosly expanding the bladder to closely contact the inside of the green tyre,

said method characterized in that the said bladder is made according to the first aspect of the present invention.

Preferred features of the invention are the object of the dependent claims.

DETAILED DESCRIPTION

According to a first aspect, the invention relates to a bladder for a pneumatic tyre curing apparatus, characterized in that said bladder comprises a blend of at least a first and a second rubber composition, the first and second rubber composition each comprising 100 phr of one or more different organopolysiloxane rubber, the first and the second rubber composition having a difference in dynamic stiffness E' ranging from 2 to 18 MPa, preferably from 6 to 14 MPa.

In a preferred embodiment, the one or more organopolysiloxane rubber comprised in the first and/or in the second rubber composition comprise methyl groups, as the majority of organic groups.

Herein and after the term "majority" referred to the organic groups should be interpreted as more than the half of the organic groups, preferably more than 75% of the organic groups, more preferably more than 95% of the organic groups, more preferably about 100% of the organic groups.

In a further preferred embodiment, the one or more organopolysiloxane rubber comprised in the first and/or in the second rubber composition is methyl vinyl silicone.

Preferably, the vinyl content of the methyl vynil silicone rubbers comprised in the first and/or in the second rubber composition ranges from 0.01% to 0.5%, more preferably from 0.01 to 0.3%

In a preferred embodiment the first and the second rubber composition comprise a reinforcing filler component. Preferably, the filler component is silica.

Any known type of silica capable of reinforcing a polyorganosiloxane based composition may be used. As will be understood, known silica materials typically contain a proportion of other components (e.g. as impurities), but the main component will be silicon dioxide, i.e. $SiO_2$. The content of silicon dioxide will generally be at least 90 wt.%, preferably at least 95 wt.%, e.g. at least 97 wt.%.

Silica for use in the invention is well known in the art and may include, in particular, precipitated amorphous silica, wet silica (hydrated silicic acid), dry silica (anhydrous silicic acid), fumed silica, calcium silicate, aluminium silicate, magnesium silicate (e.g. $Mg_2SiO_4$, $MgSiO_3$), magnesium calcium silicate ($CaMgSiO_4$), and aluminium calcium silicate (e.g. $Al_2O_3.CaO_2SiO_2$). Precipitated silica is preferred.

The silica used may be selected according to its specific surface area. The average specific surface area of the silica may be determined by $N_2$ adsorption according to the Brunauer-Emmett-Teller (BET) method. The Brunauer-Emmet-Teller (BET) method is described in the Journal of the American Chemical Society, Vol. 60, page 309, February 1938, and corresponding to standard NF ISO 5794-1, Appendix D (June 2010). Silica for use in the invention may have a BET specific surface area of greater than 100 $m^2/g$, preferably greater than 120 $m^2/g$, more preferably greater than 150 $m^2/g$.

In a preferred embodiment the first and the second rubber compositions comprise a different quantity of silica.

In particular, the first rubber composition comprises from 50 to 100 phr of silica, preferably from 65 to 85 phr, more preferably 70 to 80 phr, more preferably about 75 phr. The second rubber composition comprises from 20 to 50 phr of silica, preferably from 25 to 45 phr, more preferably from 30 to 40 phr, more preferably about 35 phr.

In a preferred embodiment the first and/or the second rubber composition further comprises carbon black as a reinforcing filler.

In one embodiment, the filler for use in the invention may be a blend of silica and carbon black.

The carbon black may be carbon black or modified carbon black. For example, it may be furnace black, channel blacks, or lamp blacks. For example, the carbon black may be one or more selected from the group consisting of super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks which may be used include acetylene blacks. In one embodiment, recycled carbon black may be used, for example pyrolisis carbon black obtained by tyre combustion. The carbon black may be in pelletized form or an unpelletized flocculent mass.

The amount of carbon black that may be present is not particularly limited, but may be in the range from 3 to 10 phr, preferably from 5 to 9 phr, more preferably from 7 to 8 phr.

In a preferred embodiment the first and/or the second rubber composition may further comprise a thermoplastic elastomer.

Preferably the thermoplastic elastomer is selected from styrenebutadiene-styrene (SBS), styrene-ethylene-butadiene-styrene (SEBS), styrene-ethylene-propylene-styrene (SEPS) copolymer, styrene-isoprene (SIS) copolymer, thermoplastic polyester (TPC), thermoplastic vulcanizates (TPV), or combinations thereof.

In one embodiment the first and the second rubber composition may comprise a different thermoplastic elastomer. In another embodiment the first and the second rubber composition may comprise the same thermoplastic elastomer.

More preferably, the first and/or the second rubber composition may comprise styrene-ethylene-butadiene-styrene (SEBS) as thermoplastic elastomer.

In particular the first and/or second rubber composition may comprise from 0 to 20 phr of thermoplastic elastomer, more preferably from 5 to 15 phr, more preferably about 10 phr of thermoplastic elastomer. In one embodiment the first and the second rubber composition comprise a different quantity of thermoplastic elastomer. In one embodiment, the first and second rubber composition comprise 0 phr of thermoplastic elastomer. In another embodiment the first or the second rubber composition comprise 0 phr of thermoplastic elastomer.

In a preferred embodiment the first and the second rubber composition comprise a vulcanizing agent. The vulcanizing agent of the first and the second rubber composition preferably belongs to the class of peroxides.

The peroxide vulcanizing agent of the first and the second rubber composition may selected among any of those generally known in the art. Preferably, the Di-tert-butyl 1,1,4,4-tetramethyl tetramethylene diperoxide vulcanising agent is used in the first and the second rubber composition. The peroxide vulcanizing agent may be used in an amount in the range from 0.1 to 5 phr, preferably from 0.2 to 3 phr, more preferably about 2 phr.

The first and/or the second rubber composition may further comprise zinc oxide.

Preferably, zinc oxide may be used in an amount of from about 3 to about 10 phr, preferably from about 5 to about 8 phr, more preferably about 7.5 phr.

In a preferred embodiment the first and/or the second rubber composition comprise an anti-structuring agent. The anti-structuring agent may be selected among any of those generally known in the art. Preferably the anti-structuring agent is selected from alpha-mega-siloxanediols or alkoxysilanols. More preferably the anti-structuring agent is dimethylsiloxane. The anti-structuring agent may be used in an amount in the range from 2 to 10 phr, more preferably 3 to 6 phr, more preferably anbout 3.5 to 5 phr.

The first and second rubber composition according to the invention may be prepared by methods known in the art and will involve mixing the at least one organopolysiloxane rubber with any other components herein described to produce a rubber composition for subsequent vulcanization.

The first and the second rubber composition have a difference in dynamic stiffness E' ranging from 2 to 18 MPa, preferably from 6 to 14 MPa, more preferably from 8 to 12 MPa.

The dynamic stiffness of a material is the extent to which the material resists deformation in response to an applied force. In case the applied force is uniaxial the dynamic stiffness can be expressed by the elastic modulus E' of the material (Young's modulus).

The elastic modulus E' of a rubber composition is a mechanical property that measures the tensile strenght of the rubber composition when a force is applied lengthwise. As such, it is the measure of the elastic deformation of the rubber under load. The E' of a rubber composition is quintified by the relationship between tensile stress $\sigma$ (the force applied per unit area) and axial strain $\varepsilon$ (proportional deformation) and determined using the formula:

$$E = \frac{\sigma}{\varepsilon}$$

The elasstic modulus is expressed in MegaPascals (MPa).

In a preferred embodiment the first rubber composition has a dynamic stiffness E' ranging from 16 to 24 MPa, preferably from 18 to 22 MPa, more preferably from 19 to 21 MPa and the second rubber composition has a dynamic stiffness E' ranging from 6 to 14 MPa, preferably from 8 to 12 MPa, more preferably from 9 to 11 MPa.

Preferably the first and the second rubber composition are blended in a ratio ranging from 4:1 to 1:4, preferably 2.5:1 to 1:2.5.

In one embodiment the first and second rubber composition may be blended in a ratio of 2.35:1 to 1 to 2.35. In another embodiment the first and second rubber composition may be blended in a ratio of 1:1.

In a highly preferred embodiment the bladder is made by a single layer of the blend of the first and the second rubber composition.

With "sinlge layer" in this context it is intended that the bladder does not present a multi-layerd structure wherein each layer may be formed by different rubber compositions, but the entire bladder structure is made up by the blend of the first and the second rubber composition according to the invention.

In a second aspect the invention relates to a a pneumatic tyre curing apparatus comprising a bladder according to the first aspect of the invention.

In a third aspect the present invention relates to a method to vulcanize a green tyre in a pneumatic tyre curing apparatus according to the second aspect, comprising at least a vulcanization mold and a bladder, the method comprising the sequential steps of:

- assemblying a green tyre; then
- positioning the green tyre in the bottom half of the vulcanization mold to a position where the horizontal centre line of the green tyre corresponds to that of a bladder; then
- lowering the top half of the mold to the upper end portion of the green tyre and raising the bottom half of the mold to the lower end portion of the green tyre while simoultaneosly expanding the bladder to closely contact the inside of the green tyre,

said method characterized in that the said bladder is made according to the first aspect of the present invention.

The assembly of the components of a tyre and production methods are well-known in the art. Assembly of the "green" tyre (the unlvulcanized tyre) is followed by compression molding in a curing apparatus comprising a suitable mold in which vulcanization produces the final tyre.

According to the third aspect of the invention a tyre can be vulcanized by the use of a curing apparatus according to the second aspect of the invention, comprising a bladder according to the first aspect of the invention.

EXAMPLES

Two organopolysiloxane-based rubber composition were produced, wherein the formuation thereof is given in Table 1, the quantity of each material being conventionally expressed in phr.

Table 1

|  | Composition A | Composition E |
| --- | --- | --- |
| Methyl vinyl silicone 1 | 50 | 50 |
| Methyl vinyl silicone 2 | 50 | 50 |
| Silica | 75 | 35 |
| Carbon black | 7.5 | 7.5 |
| Zinc oxide | 7.5 | 7.5 |
| dimethylsiloxane | 4 | 4 |
| Di-tert-butyl 1,1,4,4-tetramethyl tetramethylene diperoxide | 2 | 2 |
| TPE (SEBS) | 10 | 10 |

The methyl vinyl silicone 1 used has a vinyl content equal to 0.1%.

The methyl vinyl silicone 2 used has a vinyl content equal to 0.2%.

The silica used has a surface area (BET) equal to 170 $m^2$/g.

The carbon black used is N550.

The TPE used is a styrene-ethylene-butylene-styrene (SEBS).

The compositions of Table 1 have been blended to prepare 3 different organopolysiloxane-based rubber compositions (B, C and D) obtained by mixing diffferent ratio of Composition A and Composition E.

Composition B was made by blending 70 % of composition A and 30% of composition E, so in a ratio A: E = 2.34 : 1. Composition C was made by blending 50% of composition A and 50% of composition E, so in a ratio A : E = 1 :1. Composition D was made by blending 30% of composition A and 70% of composition E so in ratio A:E = 1: 2.34. Such compositions are summarized in Table 2.

Table 2

|  | Composition A wt% | Composition E wt% | Ratio A:E |
|---|---|---|---|
| Composition A | 100 | 0 | - |
| Composition B | 70 | 30 | 2.34: 1 |
| Composition C | 50 | 50 | 1 : 1 |
| Composition D | 30 | 70 | 1 : 2.34 |
| Composition E | 0 | 100 | - |

The organopolysiloxane-based rubber compositions A and E were mixed in a banbury, whereas the organopolysiloxane-based rubber compositions B, C and D were obtained by blending A and E in a two roll rubber mill in the respective ratios. The 5 compositions where then subjected to a vulcanization step at a temperature of between 160 and 200°C for a period of between 5 and 10 minutes and a pressure of greater than 3.5 MPa. After the vulcanization step, the compositions were subjected to a post-vulcanization step within a ventilated air oven at a temperature ranging from 190 to 200°C for a period of less than or equal to 4 hours.

Once the vulcanization and post vulcanization steps had been completed, the rubber was subjected to mechanical tests.

Table 3 summarizes the physical properties of five organopolysiloxane-based rubber compositions A - E, wherein composition A and E are comparative examples and composition B, C and D are examples of the invention.

Table 3

|  | Stiffness E' (Mpa) | M100% (MPa) | EB (%) | Hardness (Shore A) | De Mattia crack growth (mm) 1000 c. | De Mattia crack growth (mm) 6000 c. |
|---|---|---|---|---|---|---|
| Composition A | 20.8 | 3.7 | 270 | 79 | 17 | - |
| Composition B | 16 | 3.4 | 440 | 75 | 3.5 | 15 |
| Composition C | 15 | 3.2 | 495 | 71 | 4.5 | 8 |
| Composition D | 13 | 2.9 | 540 | 69 | 6 | 7 |
| Composition E | 9.4 | 2.1 | 600 | 64 | 0 | 5 |

In particular, the following were measured: dynamic stiffness measured according to the ISO 4664-1 standard (2011 edition); M 100% measured according to the ISO 37 standard (2017 edition); elongation at break measured according to the ISO 37 standard (2017 edition); Shore A Hardness measured according to the ISO 48-4; De Mattia crack growth at 1000 and 6000 cycles, measured according to the ISO 132 standard (2017 edition 6).

The data reported in table 3 demonstrate that the selected compositions are able to produce a bladder, wherein the mechanical characteristics thereof are capable of satisfying the necessary requirements in order to be used in a mold for pneumatic tyres.

Composition A show outstanding dynamic stiffness E' and a good M100% but an unsatisfactory elongation at break and poor crack propagation. On the contrary composition E shows poor dynamic stiffness and poor M100% while providing an excellent elongation at break and crack propagation. Composition B, C and D instead shows balanced properties that are needed to provide an bladder excellent in performances.

In particular, the bladder for tyre manufacturing should ensure heat and stress resistance but at the same time a good elongation at break to maximize its service life. For this reason, the physical properties of the bladder compound need to be balanced taking into account that during service life one of the main failure modes is due to an increase on the modulus that leads to crack formation.

The selected compositions provide satisfactory values of elongation at break together with improved flex properties (crack growth), while providing values of dynamic stiffness that can ensure the prevention of buckling effects. It is possoble to observe how the crack propagation properties get significantly better while increasing the amount of composition E in the blends B, C and D.

The siloxane bonds on the chemical structure of polyorganosiloxanes that confer to these materials higher heat resistance and chemical stability than other rubbers are not impacted by the physical blending. Indeed, the new materials preserve their intermolecular forces between silicone bonds and thus, the excellent resistance in a wide range of temperatures (-60 °C to more than 300 °C). Furthermore, the methyl groups located on the outer part of the structure that endow these materials of excellent interfacial properties such as hydrophobicity and releasability, maintain their functionality in the new blends.

From the above description, it follows that the inventors of the present invention have developed a new silicone bladder for pneumatic tyre curing apparatusthat is capable of avoiding the use of antiadhesive substances, and as such presenting advantages in terms of productivity, ntegrity and sustainability, and at the same time showing an excellent balance in the performances of durability and elasticity, that are required for an excellent tyre vulcanization process.

**Claims**

1. Bladder for a pneumatic tyre curing apparatus, **characterized in that** said bladder comprises a blend of at least a first and a second rubber composition, the first and second rubber composition each comprising 100 phr of one or more organopolysiloxane rubber, the first and the second rubber composition having a difference in dynamic stiffness E' ranging from 2 to 18 MPa, preferably from 6 to 14 MPa, the dynamic stiffness being measured according to ISO 4664-1 standard.

2. Bladder according to claim 1, **characterized in that** the first rubber composition has a dynamic stiffness E' ranging from 16 to 24 MPa, preferably 18 to 22 MPa and the second rubber composition has a dynamic stiffness E' ranging from 6 to 14 MPa, preferably 8 to 12 MPa.

3. Bladder according to any one of the preceeding claims charaterized in that the first and the second rubber compositions are blended in a ratio ranging from 4:1 to 1: 4, preferably from 2.5:1 to 1:2.5.

4. Bladder according to any one of the preceeding claims, **characterized in that** it is made of a single layer of the said blend of the first and second rubber composition.

5. Bladder according to any one of the preceeding claims, **characterized in that** the first and second rubber composition further comprise silica.

6. Bladder according to claim 5 **characterized in that** the first rubber composition comprises from 50 to 100 phr of silica, preferably 65 to 85 phr; and the second rubber composition comprises from 20 to 50 phr of silica, preferably 25 to 45.

7. Bladder according to claim 5 or 6, **characterized in that** said silica has a surface area (BET) of greater than 150 m$^2$/g.

8. Bladder according to any one of the preceeding claims, **characterized in that** the organopolysiloxane rubber of the first and/or second rubber compositions comprise methyl groups as the majority of the organic groups.

9. Bladder according to any one of the preceeding claims **characterized in that** the one or more organopolysiloxane rubber of the first and/or second rubber compositions comprise methyl vinyl silicone rubber.

10. Bladder according to claim 9 **characterized in that** the methyl vinyl silcone rubber of the first and/or second rubber composition have a vinyl content ranging from 0.01% to 0.5%, preferably from 0.01% to 0.3%

11. Bladder according to any one of the preceding claims, **characterized in that** said first and/or second rubber compositions comprise from 0 to 20 phr of a thermoplastic elastomer.

12. Bladder according to any one of the preceding claims, **characterized in that** said first and/or second rubber compositions further comprise from 2 to 10 phr of anti-structuring agents selected from alpha-mega-siloxanediols or alkoxysilanols.

**13.** Bladder according to any one of the preceding claims, **characterized in that** the said first and second rubber compositions comprise from 1 to 3 phr of a vulcanizing agent belonging to the class of peroxides, preferably Di-tert-butyl 1,1,4,4-tetramethyl tetramethylene diperoxide.

**14.** Pneumatic tyre curing apparatus **characterized in that** it comprises a bladder according to any one of the preceding claims.

**15.** A method to vulcanize a green tyre in a pneumatic tyre curing apparatus according to claim 14 comprising at least a vulcanization mold and a bladder, the method comprising the sequential steps of:

- assemblying a green tyre;
- positioning the green tyre in the bottom half of the vulcanization mold to a position where the horizontal centre line of the green tyre corresponds to that of a bladder;
- lowering the top half of the mold to the upper end portion of the green tyre and raising the bottom half of the mold to the lower end portion of the green tyre while simoultaneosly expanding the bladder to closely contact the inside of the green tyre;

said method **characterized in that** the said bladder is made according to claim 1 to 13.

Europäisches
Patentamt

European
Patent Office

Office européen
des brevets

# EUROPEAN SEARCH REPORT

**Application Number**

EP 22 18 4290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2021/105629 A1 (MICHELIN & CIE [FR]) 3 June 2021 (2021-06-03) * page 4, paragraph 5; claims 1,4,5,6 * | 1-15 | INV. B29D30/06 |
| A,D | JP 2010 221505 A (BRIDGESTONE CORP) 7 October 2010 (2010-10-07) * claims 1,3 * | 1-15 | |
| A | EP 2 181 838 A1 (GOODYEAR TIRE & RUBBER [US]) 5 May 2010 (2010-05-05) * claim 6; figures * | 1-15 | |
| | | | **TECHNICAL FIELDS SEARCHED (IPC)** |
| | | | B29D |

The present search report has been drawn up for all claims

| Place of search | Date of completion of the search | Examiner |
|---|---|---|
| Munich | 6 December 2022 | Kopp, Christian |

EPO FORM 1503 03.82 (P04C01)

## ANNEX TO THE EUROPEAN SEARCH REPORT
## ON EUROPEAN PATENT APPLICATION NO.

EP 22 18 4290

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2022

| Patent document cited in search report | | Publication date | Patent family member(s) | | Publication date |
|---|---|---|---|---|---|
| WO 2021105629 | A1 | 03-06-2021 | EP | 4065358 A1 | 05-10-2022 |
| | | | FR | 3103820 A1 | 04-06-2021 |
| | | | WO | 2021105629 A1 | 03-06-2021 |
| JP 2010221505 | A | 07-10-2010 | NONE | | |
| EP 2181838 | A1 | 05-05-2010 | AT | 543634 T | 15-02-2012 |
| | | | EP | 2181838 A1 | 05-05-2010 |
| | | | US | 2010089520 A1 | 15-04-2010 |
| | | | US | 2011001273 A1 | 06-01-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010221505 B

- WO 2022038176 A

**Non-patent literature cited in the description**

- *Journal of the American Chemical Society,* February 1938, vol. 60, 309